# EUROPEAN PATENT APPLICATION

(11) **EP 1 788 739 A1**
(43) Date of publication of application: **23.05.2007**
(21) Application number: 05772502.0
(22) Date of filing: 16.08.2005
(51) Int. Cl.: H04J 11/00, H04B 3/04, H04B 7/005

(54) **WIRELESS TRANSMITTING APPARATUS AND PRE-EQUALIZATION METHOD THEREOF**

(30) Priority: 08.09.2004 JP 2004261673
(71) Applicant: MATSUSHITA ELECTRIC INDUSTRIAL CO., LTD., Osaka 571-8501 (JP)
(72) Inventor: MATSUMOTO, Atsushi., Matsushita El.Ind.Co.Ltd, Osaka 540-6319 (JP); NISHIO, Akihiko., Matsushita Electric.Ind.Co.Ltd, Osaka 540-6319 (JP); MIYOSHI, Kenichi., Matsushita El. Ind. Co.Ltd, Osaka 540-6319 (JP)
(74) Representative: Grünecker, Kinkeldey, Stockmair & Schwanhäusser Anwaltssozietät
(86) International application number: PCT/JP2005/014956
(87) International publication number: WO 2006/027937

(57) **Abstract**

A wireless transmitting apparatus capable of improving the reception error rate of a wireless receiving apparatus. In the inventive apparatus, a channel estimating part (122) acquires a propagation path estimated value. A control part (113) determines whether an estimation precision of the acquired propagation path estimated value is equal to or greater than a predetermined level. A pre-equalization (PE) part applies PE based on the acquired propagation path estimated value to a transport signal if it is determined that the estimation precision is equal to or greater than the predetermined level. Otherwise, the pre-equalization (PE) part avoids the PE application to the transport signal. An RF part (117) transmits the transport signal to which PE has been applied, and transmits the transport signal for which the PE application has been avoided.

## Description

### Technical Field

The present invention relates to a radio transmission apparatus which performs pre-equalization of propagation path distortion and a pre-equalization method thereof.

### Background Art

A next-generation mobile communication system which realizes ultra-high-speed packet transmission is required to improve transmission efficiency so as to use limited frequency resources more efficiently.

Examples of a technique which is effective for improvement of transmission efficiency include a pre-equalization technique described in patent document 1. "Pre-equalization" (hereinafter, referred to as "PE") is a technique which equalizes propagation path distortion-- that is, non-uniformity of a propagation path characteristic in the frequency domain-- before performing transmission, based on an estimation result of the propagation path characteristic (hereinafter, referred to as a "propagation path estimation value") which fluctuates with time. PE superimposes a weight showing an inverse characteristic of the estimated propagation path distortion on the transmission signal. PE may also be called pre-coding or pre-distortion.

The signal subjected to PE and transmitted from a transmission apparatus arrives at a reception apparatus after being affected by propagation path distortion of a radio channel. Therefore, with the received signal at the reception apparatus, the weight superimposed beforehand and the propagation path distortion cancel out each other and as a result, the received signal becomes ideally totally free of distortion.

Furthermore, patent document 2, patent document 3 and non-patent document 1 also disclose PE techniques. These documents describe uses PE in a multicarrier system and show that PE is also effective for improvement of transmission efficiency in the multicarrier system.
Patent Document 1: Japanese Patent Application Laid-Open No.8-223075
Patent Document 2: Japanese Patent Application Laid-Open No.2003-234719
Patent Document 3: Japanese Patent Application Laid-Open No.2003-249911
Non-Patent Document1: "Pre-Equalization in Combination with Transmit Diversity for OFDMA Code-Division Multiplexing Systems in Fading Channels", Ivan Cosovic, VTC2004

### Disclosure of Invention

### Problems to be Solved by the Invention

However, because the above described conventional PE depends on the estimation accuracy of a propagation path estimation value, when a weight obtained based on a propagation path estimation value containing an estimation error is superimposed on a signal, the signal reflecting the estimation error is transmitted to a radio reception apparatus, which results in a problem that the reception error rate of the radio reception apparatus degrades.

It is therefore an obj ect of the present invention to provide a radio transmission apparatus capable of improving the reception error rate of a radio reception apparatus and a pre-equalization method thereof.

### Means for Solving the Problem

The radio transmission apparatus of the present invention adopts a configuration having: an acquisition section that acquires a propagation path estimation value; a determination section that determines whether or not estimation accuracy of the acquired propagation path estimation value is equal to or above a predetermined level; a pre-equalization section that applies pre-equalization based on the acquired propagation path estimation value to a transmission signal when the estimation accuracy is determined to be equal to or above the predetermined level and that avoids application of the pre-equalization to the transmission signal when the estimation accuracy is determined to be less than the predetermined level; and a transmission section that transmits a transmission signal to which the pre-equalization is applied and a transmission signal for which the application of the pre-equalization is avoided.

The radio reception apparatus of the present invention adopts a configuration having an estimation section that estimates a propagation path characteristic using a received signal to acquire a propagation path estimation value, a determination section that determines whether the received signal is one to which pre-equalization is applied or one for which the application of pre-equalization is avoided, and a compensation section that compensates for distortion of the received signal based on the estimated propagation path estimation value when the received signal is determined to be one for which the application of pre-equalization is avoided and that avoids the compensation for the distortion when the received signal is determined to be one to which pre-equalization is applied.

The pre-equalization method of the present invention has the steps of acquiring a propagation path estimation value, determining whether or not the estimation accuracy of the acquired propagation path estimation value is equal to or above a predetermined level, applying pre-equalization to the transmission signal when the estimation accuracy of the acquired propagation path estimation value is determined to be equal to or above a predetermined level, and avoiding the application of pre-equalization to the transmission signal when the estimation accuracy is determined to be less than said predetermined level.

### Advantageous Effect of the Invention

According to the present invention, it is possible to improve a reception error rate of a radio reception apparatus.

### Brief Description of Drawings

FIG.1 is a block diagram showing the configuration of a base station apparatus according to Embodiment 1 of the present invention;
FIG.2 is a block diagram showing the configuration of the mobile station apparatus according to this embodiment;
FIG.3 shows a relationship between a received SIR and channel estimation accuracy according to this embodiment;
FIG.4 shows a setting of an SIR threshold according to this embodiment;
FIG.5 shows a radio frame according to this embodiment;
FIG.6 shows an example of the operations at the base station apparatus according to this embodiment;
FIG.7 shows an example of distortion estimated at the base station apparatus according to this embodiment;
FIG.8 shows an example of a weight calculated at the base station apparatus according to this embodiment;
FIG.9 shows an example of distortion of a received signal at the mobile station apparatus according to this embodiment;
FIG.10 shows another example of the operations at the base station apparatus according to this embodiment;
FIG.11 shows an example of distortion estimated at the base station apparatus according to this embodiment;
FIG.12 shows another example of a weight calculated at the base station apparatus according to this embodiment;
FIG.13 shows another example of distortion of a received signal at a mobile station apparatus according to this embodiment;
FIG.14 is a block diagram showing the configuration of a base station apparatus according to Embodiment 2 of the present invention;
FIG.15 shows a relationship between fD and channel estimation accuracy according to this embodiment;
FIG.16 shows a setting of an fD threshold according to this embodiment;
FIG.17 shows the operations at the base station apparatus according to this embodiment;
FIG.18 shows an example of distortion estimated at the base station apparatus according to this embodiment;
FIG.19 shows an example of a weight calculated at the base station apparatus according to this embodiment;
FIG.20 shows an example of distortion of a downlink propagation path according to this embodiment;
FIG.21 shows an example of distortion of a received signal at a mobile station apparatus according to this embodiment;
FIG.22 is a block diagram showing the configuration of the base station apparatus according to Embodiment 3 of the present invention;
FIG.23 is a block diagram showing the configuration of a mobile station apparatus according to this embodiment;
FIG.24 shows the operations at the base station apparatus according to this embodiment;
FIG.25 is a block diagram showing the configuration of the base station apparatus according to Embodiment 4 of the present invention;
FIG.26 is a block diagram showing the configuration of the base station apparatus according to Embodiment 5 of the present invention;
FIG.27 shows a received level determination of a control section according to this embodiment;
FIG.28 shows the operations at the base station apparatus according to this embodiment;
FIG.29 is a block diagram showing the configuration of the base station apparatus according to Embodiment 6 of the present invention;
FIG.30 is a block diagram showing the configuration of the mobile station apparatus according to this embodiment; and
FIG.31 shows the operations at the base station apparatus according to this embodiment.

### Best Mode for Carrying Out the Invention

Hereinafter, embodiments of the present invention will be explained in detail with reference to the accompanying drawings.

### (Embodiment 1)

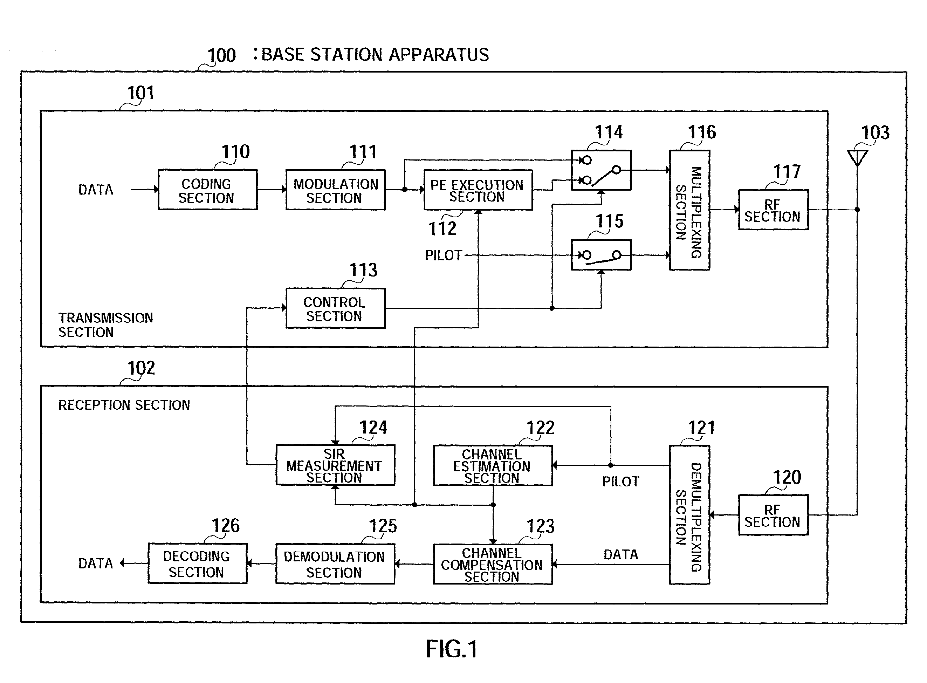

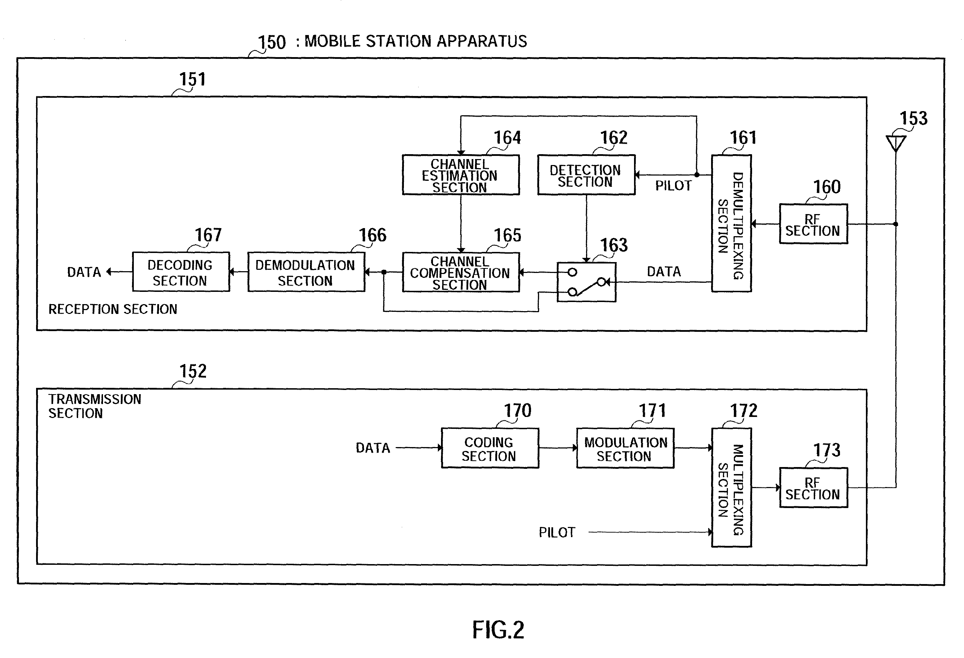

FIG. 1 is a block diagram showing the configuration of the base station apparatus to which employs a radio transmission apparatus according to Embodiment 1 of the present invention is applied. On the other hand, FIG.2 is a block diagram showing the configuration of a mobile station apparatus to which a radio reception apparatus according to Embodiment 1 of the present invention is applied. That is, this embodiment will be explained taking, as an example, a case where a radio transmission apparatus and a radio reception apparatus are used for a downlink radio communication.

It is also possible to apply a radio transmission apparatus to a mobile station apparatus and apply a radio reception apparatus to a base station apparatus and use the radio transmission apparatus and the radio reception apparatus for an uplink radio communication. Furthermore, although this embodiment will be explained on the assumption that a radio transmission apparatus and a radio reception apparatus are used in a TDD (Time Division Duplex) system, the radio transmission apparatus and the radio reception apparatus may also be used in an FDD (Frequency Division Duplex) system.

Base station apparatus 100 has transmission section 101. Furthermore, base station apparatus 100 also has reception section 102 and antenna 103.

Transmission section 101 as the radio transmission apparatus has coding section 110; modulation section 111; PE execution section 112; control section 113; switches 114 and 115; multiplexing section 116; and RF section 117. Reception section 102 has RF section 120; demultiplexing section 121; channel estimation section 122; channel compensation section 123; SIR measurement section 124; demodulation section 125; and decoding section 126.

In transmission section 101, coding section 110 codes a data signal (hereinafter, referred to as "data") to be transmitted to mobile station apparatus 150. Modulation section 111 modulates the data coded by coding section 110.

PE execution section 112 applies PE based on an estimation value of an uplink propagation path (hereinafter, referred to as "uplink propagation path estimation value") acquired by channel estimation section 122 to the data modulated by modulation section 111. More specifically, PE execution section 112 superimposes a weight indicating an inverse characteristic of propagation path distortion on the modulated data based on the uplink propagation path estimation value.

Control section 113 compares an SIR measured by SIR measurement section 124 with a predetermined SIR threshold and, according to the comparison result, determines whether or not the estimation accuracy of an uplinkpropagation path estimation value--in other words, the reliability of the uplink propagation path estimation value-- is equal to or above a certain level.

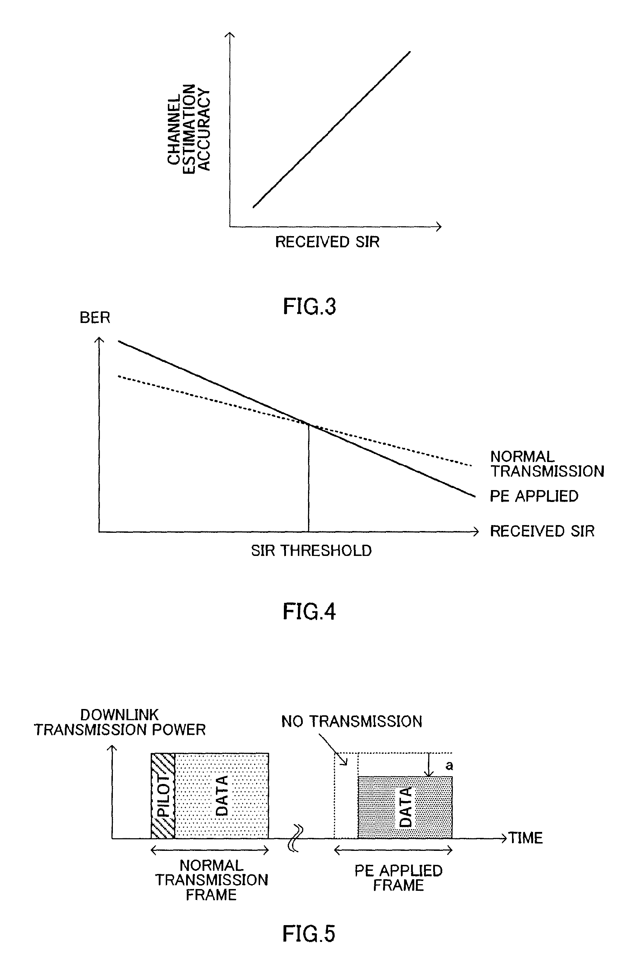

As shown in FIG.3, the higher the measured SIR (received SIR) is, the higher the estimation accuracy (the channel estimation accuracy) of the uplink propagation path estimation value becomes. Therefore, when the measured SIR is equal to or above the SIR threshold, control section 113 determines that the estimation accuracy of the uplink propagation path estimation value is equal to or above the certain level. In this case, control section 113 controls switch 114 such that an output of PE execution section 112 and the input of multiplexing section 116 are connected to each other and also controls switch 115 such that an output stage (not shown) of a pilot signal (hereinafter, referred to as a "pilot") which is a known signal and the input of multiplexing section 116 are not connected to each other. On the other hand, when the measured SIR is less than the SIR threshold, control section 113 determines that the estimation accuracy of the uplink propagation path estimation value is less than the certain level. In this case, control section 113 controls switch 114 such that an output of modulation section 111 and the input of multiplexing section 116 are connected to each other and also controls switch 115 such that an output stage of a pilot and the input of multiplexing section 116 are connected to each other.

Here, the setting of an SIR threshold will be explained. As shown in FIG.4, in the case of both normal transmission (described later) and PE application (described later), the reception error rate of mobile station apparatus 150 (for example, BER: Bit Error Rate) generally becomes lower as the received SIRbecomes higher. However, assume that a certain SIR is a boundary, and, when the measured SIR is lower than the boundary value, BER becomes lower for normal transmission than for PE application, and, on the other hand, when the measured SIR is higher than the boundary value, BER becomes lower for PE application than for normal transmission. This means that when the received SIR is lower than the boundary value, the estimation accuracy of the downlink propagation path estimation value is higher than the estimation accuracy of the uplink propagation path estimation value, whereas when the received SIR is higher than the boundary value, the estimation accuracy of the uplink propagation path estimation value is higher than the estimation accuracy of the downlink propagation path estimation value. Therefore, this boundary value is set as the above described SIR threshold. By this means, it is possible to use the higher estimation accuracy between the uplink propagation path estimation value and the downlink propagation path estimation value for distortion compensation.

Switch 114 receives the data modulated by modulation section 111 and the data to which PE has been applied by PE execution section 112 as inputs. Thus, when switch 114 connects an output of modulation section 111 and the input of multiplexing section 116 under the control of control section 113, data to which PE has not been applied after being modulated, that is, data for which the application of PE has been avoided is output to multiplexing section 116. Furthermore, when switch 114 connects an output of PE execution section 112 and the input of multiplexing section 116 under the control of control section 113, data to which PE has been applied after being modulated is output to multiplexing section 116.

When switch 115 connects the output stage of a pilot and the input of multiplexing section 116 under the control of control section 113, the pilot is output to multiplexing section 116. On the other hand, when switch 115 does not connect the output stage of the pilot and the input of multiplexing section 116 under the control of control section 113, the output of the pilot to multiplexing section 116 is blocked.

Multiplexing section 116 multiplexes the data input from switch 114 and the pilot input from switch 115 with a radio frame. In other words, multiplexing section 116 performs time-division multiplexing on data and a pilot.

More specifically, when data for which the application of PE has been avoided is input from switch 114 to multiplexing section 116, a pilot is input from switch 115 to multiplexing section 116. In this case, as shown in FIG.5, data and a pilot are multiplexed with a data signal section (hereinafter, referred to as "data section") of a radio frame and the pilot signal section (hereinafter, referred to as "pilot section"), respectively. Hereinafter, such a processing scheme will be referred to as "normal transmission" and a radio frame to which the above-described multiplexing is applied will be referred to as a "normal transmission frame. " On the other hand, when data to which PE has been applied is input from switch 114 to multiplexing section 116, no pilot is input from switch 115 to multiplexing section 116. In this case, as shown in FIG. 5, the data to which PE has been applied is multiplexed with the data section, and no pilot is multiplexed with the pilot section. Hereinafter, such a processing scheme will be referred to as "PE applied" and the radio frame to which the above-described multiplexing has been applied will be referred to as a "PE applied frame." Transmission power of the PE applied frame in the data section fluctuates and the amount of variation "a" is determined by a weight superimposed on the data through PE.

That is, the combination of PE execution section 112 and switch 114 functions as a PE section and applies PE to a transmission signal when the estimation accuracy of an uplink propagation path estimation value is determined to be equal to or above a certain level. However, it avoids the application of PE to the transmission signal when the estimation accuracy is determined to be less than the certain level. Furthermore, the PE section performs application or avoidance of PE per frame--that is, at a frame period.

Furthermore, the combination of switch 115 and multiplexing section 116 functions as a multiplexing section and multiplexes a pilot with a transmission signal when the application of PE to the transmission signal is avoided. However, it avoids multiplexing of the pilot when PE is applied to the transmission signal.

The radio frame subjected to multiplexing processing by multiplexing section 116 is output to RF section 117. RF section 117 performs predetermined transmission radio processing including, for example, D/A conversion processing and up-conversion on a radio frame from multiplexing section 116 and transmits the radio frame after the processing through antenna 103.

In reception section 102, RF section 120 performs predetermined reception radio processing including, for example, down-conversion and A/D conversion processing on a radio signal received at antenna 103 and including a radio frame transmitted from mobile station apparatus 150. The radio frame subjected to the reception radio processing is output to demultiplexing section 121. Demultiplexing section 121 demultiplexes the pilot and the data respectively multiplexed with the pilot section and the data section of the radio frame input from RF section 120.

Channel estimation section 122 performs uplink channel estimation using the pilot demultiplexed by demultiplexing section 121 and acquires an uplink propagation path estimation value. In this embodiment, although an uplink propagation path estimation value is used for PE on data transmitted through a downlink, a downlink propagation path estimation value can also be used for PE. In this case, the downlink propagation path estimation value is allowed to be fed back from mobile station apparatus 150 to base station apparatus 100. Channel estimation section 122 then acquires the fed back propagation path estimation value. Such a configuration can be adopted not only for the TDD scheme but also for the FDD scheme.

Channel compensation section 123 compensates for distortion of the data demultiplexed by demultiplexing section 121 based on the uplink propagation path estimation value acquired by channel estimation section 122.

SIR measurement section 124 measures an average uplink SIR using the pilot demultiplexed by demultiplexing section 121 and the uplink propagation path estimation value acquired by channel estimation section 122.

Demodulation section 125 demodulates the data where distortion is compensated. Decoding section 126 decodes the data demodulated by demodulation section 125.

Mobile station apparatus 150 in FIG.2 has reception section 151, transmission section 152 and antenna 153.

Reception section 151 as the radio reception apparatus has RF section 160; demultiplexing section 161; detection section 162; switch 163; channel estimation section 164; channel compensation section 165; demodulation section 166; and decoding section 167. Transmission section 152 has coding section 170; modulation section 171; multiplexing section 172; and RF section 173.

RF section 160 in reception section 151 receives a radio signal through antenna 153. The received signal includes the radio frame transmitted from base station apparatus 100. RF section 160 performs predetermined reception radio processing including, for example, down-conversion and A/D conversion processing. The received signal after the reception radio processing is output to demultiplexing section 161. Demultiplexing section 161 separates the signal corresponding to the pilot section of the radio frame and the signal corresponding to the data section of the radio frame respectively from the received signal output from RF section 160.

Detection section 162 as a determination section measures the received level of the received signal of the pilot section demultiplexed bydemultiplexingsection 161 and compares the measured value with a predetermined threshold. When the measured value is less than the threshold as a comparison result, detection section 162 determines that the measured received level is almost equal to a regular noise level. On the other hand, when the measured value is equal to or above the threshold, detection section 162 determines that the measured received level is higher than the regular noise level. In this way, a pilot multiplexed with the pilot section is detected. In other words, it is determined whether the received radio frame is a normal transmission frame or a PE applied frame. That is, when the measured value is less than the threshold, it is determined that no pilot has been multiplexed and the radio frame is a PE applied frame. When the measured value is equal to or above the threshold, it is determined a pilot has been multiplexed and the radio frame is a normal transmission frame.

Channel estimation section 164 performs downlink channel estimation using the received signal of the pilot section demultiplexed by demultiplexing section 161 and acquires a propagation path estimation value (hereinafter, referred to as a "downlink propagation path estimation value").

When the determination result by detection section 162 shows that the received radio frame is a normal transmission frame, switch 163 connects the output of demultiplexing section 161 and the input of channel compensation section 165, and outputs the received signal of the data section demultiplexed by demultiplexing section 161 to channel compensation section 165. On the other hand, when the received radio frame is determined to be a PE applied frame, switch 163 connects the output of demultiplexing section 161 and the input of demodulation section 166, and outputs the received signal of the demultiplexed data section to demodulation section 166.

When the received signal of the data section is input from switch 163, channel compensation section 165 compensates for distortion of the received signal of the data section based on the downlink propagation path estimation value acquired by channel estimation section 164. The received signal of the data section where distortion has been compensated is output to demodulation section 166. Here, the distortion to be compensated for includes a frequency offset and phase noise in addition to propagation path distortion.

That is, the combination of switch 163 and channel compensation section 165 functions as a compensation section and compensates for distortion of the received signal when the radio frame included in the received signal is determined to be a normal transmission frame. On the other hand, it avoids compensation for the distortion when the radio frame included in the received signal is determined to be a PE applied frame.

Demodulation section 166 demodulates data multiplexed with the data section from the signal input from channel compensation section 165 or from switch 163. Decoding section 167 decodes the data demodulated by demodulation section 166.

In transmission section 152, coding section 170 codes data for base station apparatus 100. Modulation section 171 modulates the data coded by coding section 170. Multiplexing section 172 multiplexes a pilot and the data modulated by modulation section 171 on a radio frame. RF section 173 performs predetermined transmission radio processing including, for example, D/A conversion processing and up-conversion on the radio frame subjected to the multiplexing processing by multiplexing section 172 and transmits the radio frame subjected to the transmission radio processing through antenna 153.

Next, the operations at base station apparatus 100 having the above configuration will be explained. Here, as examples, a case where the uplink propagation path estimation value includes no estimation error and a case where the uplink propagation path estimation value includes an estimation error will be explained.

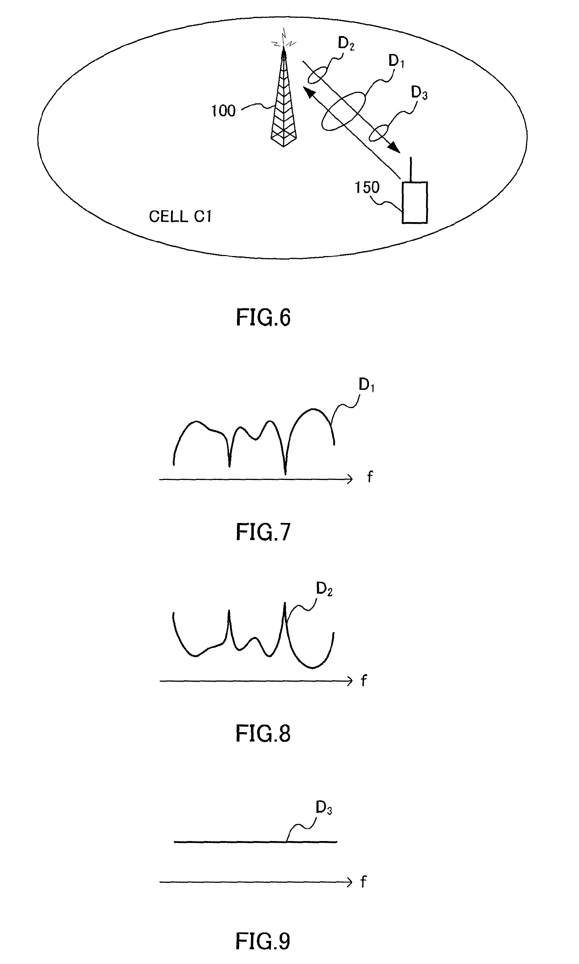

First, the operations when the uplink propagation path estimation value includes no estimation error will be explained using FIG.6 to FIG.9.

As shown in FIG.6, base station apparatus 100 and mobile station apparatus 150 communicate with each other by radio in cell C1 . The radio frame transmitted by mobile station apparatus 150 arrives at base station apparatus 100 through an uplink propagation path. At this time, the radio frame is subjected to propagation path distortion.

Base station apparatus 100 performs channel estimation using the pilot multiplexed with the radio frame by channel estimation section 122 and estimates propagation path distortion D₁ shown in FIG.7, for example. Estimated propagation path distortion D₁ does not include any estimation error. As shown in FIG.8, PE execution section 112 calculates weight D₂ showing an inverse characteristic of estimated propagation path distortion D₁. Then, calculated weight D₂ is superimposed on the data. The data on which weight D₂ is superimposed is multiplexed with the radio frame at multiplexing section 116, and this radio frame is transmitted to mobile station apparatus 150.

The transmitted radio frame arrives at mobile station apparatus 150 through a downlink propagation path. When the reversibility of the propagation path of the TDD system is assumed, the radio frame is subjected to the propagation path distortion in downlink, which is identical to the propagation path distortion in the uplink. As a result, weight D₂ superimposed beforehand on the radio frame and the propagation path distortion given to the radio frame on the downlink cancel out each other.

Therefore, in this example, as indicated by D₃ in FIG.9, distortion in the frequency domain does not remain in the radio frame received by mobile station apparatus 150. In this way, when an estimation error is not included in the uplink propagation path estimation value, a PE applied frame is transmitted at all times. By this means, it is possible to eliminate the necessity of pilot transmission, use energy corresponding to pilot transmission for data transmission and improve the transmission efficiency.

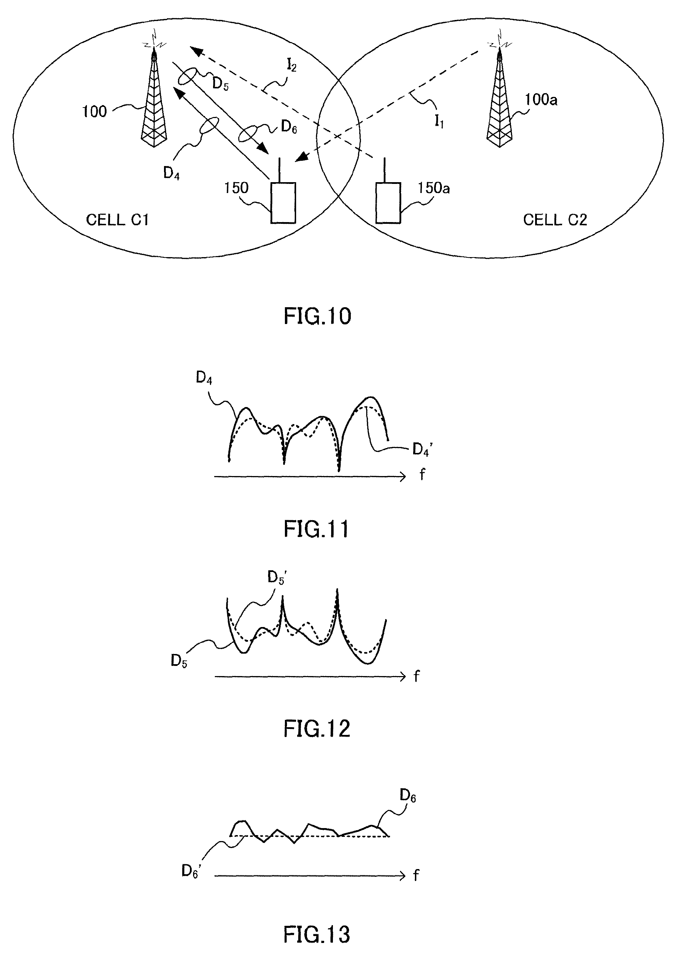

Next, the operations when an estimation error is included in the uplink propagation path estimation value will be explained using FIG.10 to FIG.13.

As shown in FIG.10, base station apparatus 100 and mobile station apparatus 150 communicate with each other by radio in cell C1. Furthermore, mobile station apparatus 150 is located near the boundary between cell C1 and cell C2 which is adjacent to cell C1. Furthermore, in cell C2, mobile station apparatus 150a which is located near the boundary with cell C1 communicates with base station apparatus 100a by radio in cell C2. Thus, in cell C1, a signal transmitted from base station apparatus 100a in the downlink and a signal transmitted from mobile station apparatus 150a in the uplink exist as interference signals I₁ and I₂, respectively.

A radio frame transmitted by mobile station apparatus 150 arrives at base station apparatus 100 through an uplink propagation path. At this time, the radio frame is subjected to propagation path distortion.

In base station apparatus 100, channel estimation section 122 performs channel estimation using a pilot multiplexed with the radio frame and estimates, for example, propagation path distortion D₄ shown in FIG.11. Here, an estimation error is included in estimated propagation path distortion D₄ due to the influence of interference signals I₁ and I₂. That is, there is an error between propagation path distortion D₄ and propagation path distortion D₄' ideally estimated in a situation where no influence of interference signals I₁ and I₂ are included.

As shown in FIG.12, PE execution section 112 calculates weight D₅ showing an inverse characteristic of estimated propagation path distortion D₄. Calculated weight D₅ is then superimposed on data. The calculated weight D₅ is a coefficient obtained from propagation path distortion D₄ including an estimation error, and so an error is also included in weight D₅. That is, there is an error between weight D₅ and weight D₅' obtained from propagation path distortion D₄'.

SIR measurement section 124 measures an uplink received SIR. Control section 113 then determines whether PE should be applied to the radio frame (data) to be transmitted or the application of PE should be avoided, based on the measurement result.

When the measured received SIR is equal to or above an SIR threshold, the propagation path distortion estimation accuracy at base station apparatus 100 is equal to or above the propagation path distortion accuracy at mobile station apparatus 150, and it is therefore determined that PE is applied to the radio frame (data).

In this case, the data on which weight D₅ is superimposed is multiplexed with the data section of the radio frame at multiplexing section 116, and this radio frame is transmitted to mobile station apparatus 150. The transmitted radio frame arrives at mobile station apparatus 150 through the downlink propagation path. At this time, the radio frame is subjected to propagation path distortion, which is identical to the uplink propagation path distortion. As a result, weight D₅ superimposed beforehand on the radio frame and the propagation path distortion given to the radio frame in the downlink cancel out each other.

If weight D₅' is used, as shown by D₆' in FIG.13, the distortion in the frequency domain does not remain in the radio frame received by mobile station apparatus 150.

However, an estimation error of the propagation path distortion is actually included in weight D₅. Thus, as shown by D₆ in FIG. 13, distortion in the frequency domain remains in the radio frame received by mobile station apparatus 150. However, the propagation path distortion estimation accuracy at base station apparatus 100 is equal to or above the propagation path distortion estimation accuracy at mobile station apparatus 150. Furthermore, it is possible to eliminate the necessity of pilot transmission with transmission of a PE applied frame and use energy corresponding to pilot transmission for data transmission, so that the transmission efficiency can be improved.

When the received SIR measured at SIR measurement section 124 is less than the SIR threshold, the propagation path distortion estimation accuracy at base station apparatus 100 is less than the propagation path distortion estimation accuracy at mobile station apparatus 150, and it is determined to avoid the application of PE to the radio frame (data).

In this case, the data on which weight D₅ is superimposed is not output to multiplexing section 116 and the data on which no weight D₅ is superimposed is multiplexed with the data section of the radio frame at multiplexing section 116. Furthermore, a pilot is multiplexed with the pilot section of the radio frame. Then, this radio frame is transmitted to mobile station apparatus 150. The transmitted radio frame arrives at mobile station apparatus 150 through the downlink propagation path. At this time, the radio frame is subjected to propagation path distortion, which is identical to the propagation path distortion in the uplink.

In mobile station apparatus 150, detection section 162 detects a pilot, and the received signal in the data section is output to channel compensation section 165. Furthermore, channel estimation section 164 estimates the downlink propagation path distortion using the detected pilot. Then, channel compensation section 165 compensates for the distortion of the received signal of the data section based on the estimated propagation path distortion.

An estimation error is included in the propagation path distortion estimated at channel estimation section 164. Thus, the distortion in the frequency domain remains in the received signal compensated at channel compensation section 165. However, the propagation path distortion estimation accuracy at mobile station apparatus 150 is higher than the propagation path distortion estimation accuracy at base station apparatus 100. Therefore, the reception error rate at mobile station apparatus 150 can be improved, compared to when PE is applied using the propagation path distortion estimated at base station apparatus 100 at all times without considering the propagation path distortion estimation accuracy at base station apparatus 100.

In this way, according to this embodiment, when the estimation accuracy of the uplink propagation path estimation value is determined to be equal to or above a predetermined level, PE based on the uplink propagation path estimation value is applied to the data. On the other hand, when the estimation accuracy is determined to be level less than the predetermined level, the application of PE to the data is avoided. Therefore, when the estimation error of the uplink propagation path estimation value becomes greater than a certain level, the application of PE can be avoided. Therefore, it is possible to prevent the PE applied frame in which an estimation error equal to or above the certain level is reflected from being transmitted and improve the reception error rate of mobile station apparatus 150.

Furthermore, according to this embodiment, when the uplink received SIR is equal to or above the SIR threshold, the estimation accuracy is determined to be equal to or above a predetermined level. On the other hand, when the received SIR is less than the SIR threshold, the estimation accuracy is determined to be less than the predetermined level. This means that the estimation accuracy of the uplink propagation path estimation value can be determined based on the result of a comparison between the received SIR and the SIR threshold. Therefore, the estimation accuracy can be determined in accordance with a fluctuation of the propagation path characteristic due to interferences from other cells.

Furthermore, according to this embodiment, when the application of PE to the data is avoided, a pilot is multiplexed with the data. On the other hand, when PE is applied to the data, mobile station apparatus 150 detects whether or not the pilot is multiplexed on the received signal in the pilot section to avoid multiplexing of the pilot and identifies whether the application of PE has been performed or avoided, thereby according to the identification result, adaptively switching reception schemes--that is, whether or not to perform channel compensation in the reception processing.

Furthermore, according to this embodiment, application or avoidance of PE is switched per frame, and, therefore, it is possible to switch between application and avoidance of PE in accordance with the fluctuation of the estimation accuracy between radio frames.

### (Embodiment 2)

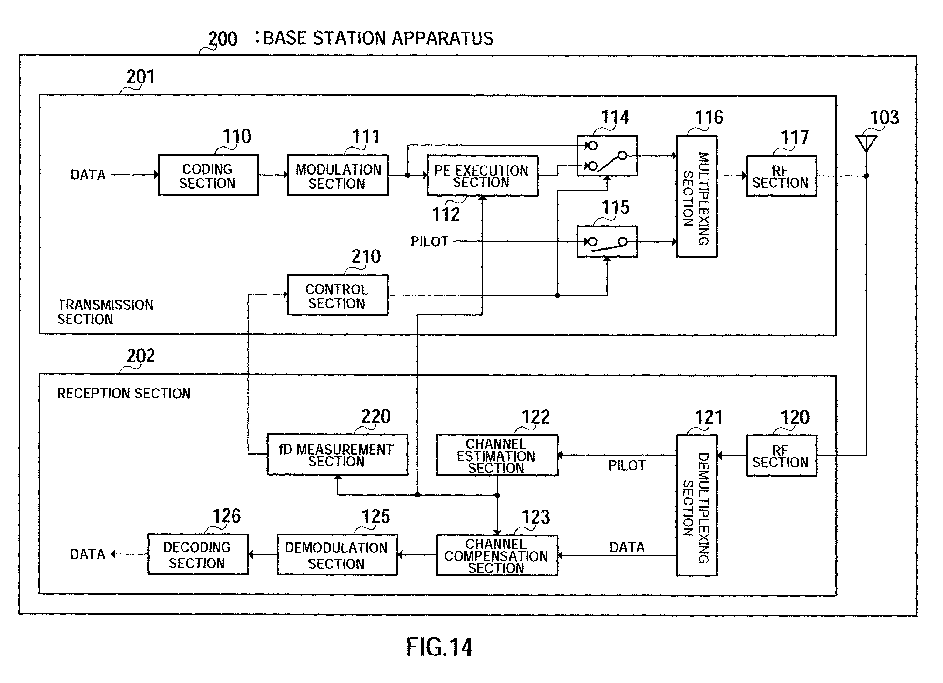

FIG.14 is a block diagram showing the configuration of a base station apparatus to which a radio transmission apparatus according to Embodiment 2 of the present invention is applied. Base station apparatus 200 in FIG.14 has the same basic configuration as base station apparatus 100 explained in Embodiment 1. Components that are the same as those explained in Embodiment 1 are assigned the same reference codes and their detailed explanations will be omitted. Furthermore, mobile station apparatus 150 explained in Embodiment 1 is able to communicate with base station apparatus 200 by radio.

Base station apparatus 200 has transmission section 201 and reception section 202 instead of transmission section 101 and reception section 102 explained in Embodiment 1, respectively. Transmission section 201 has the same basic configuration as transmission section 101 and has control section 210 instead of control section 113 explained in Embodiment 1 . Furthermore, reception section 202 has the same basic configuration as reception section 102 and has fD (maximum Doppler frequency) measurement section 220 instead of SIR measurement section 124 explained in Embodiment 1.

fD measurement section 220 monitors temporal fluctuations of an uplink propagation path estimation value acquired by channel estimation section 122 and measures fD.

Control section 210 compares fD measured by fD measurement section 220 with a predetermined threshold and determines, according to the comparison result, whether or not the estimation accuracy of the uplink propagation path estimation value is equal to or above a certain level-- in other words, whether or not the reliability of the uplink propagation path estimation value is equal to or above the certain level.

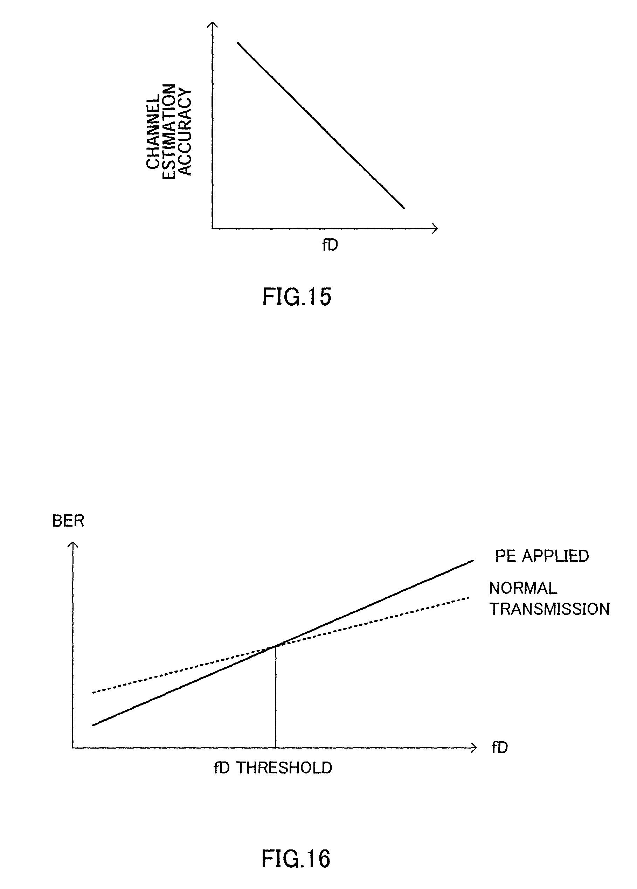

As shown in FIG.15, the lower the measured fD is, the higher the estimation accuracy of the uplink propagation path estimation value (channel estimation accuracy) becomes. Therefore, when the measured fD is less than an fD threshold, control section 210 determines that the estimation accuracy of the uplink propagation path estimation value is equal to or above a certain level. In this case, control section 210 controls switch 114 such that an output of PE execution section 112 and the input of multiplexing section 116 are connected to each other and also controls switch 115 such that an output stage (not shown) of a pilot and the input of multiplexing section 116 are not connected to each other. On the other hand, when the measured fD is equal to or above the fD threshold, control section 210 determines that the estimation accuracy of the uplink propagation path estimation value is less than the certain level. In this case, control section 210 controls switch 114 such that an output of modulation section 111 and the input of multiplexing section 116 are connected to each other and also controls switch 115 such that an output stage of a pilot and the input of multiplexing section 116 are connected to each other.

Here, the setting of an fD threshold will be explained. As shown in FIG.16, the higher the fD is, the higher BER of mobile station apparatus 150 generally becomes both for normal transmission and PE application. However, assume that a certain fD value is a boundary, and, when the measured fD is higher than the boundary value, the BER is lower for normal transmission than for PE application, and, when the measured fD is lower than the boundary value, the BER is lower for PE application than for normal transmission. This means that when the fD is higher than the boundary value, the estimation accuracy of the downlink propagation path estimation value is higher than the estimation accuracy of the uplink propagation path estimation value, and that when the fD is lower than the boundary value, the estimation accuracy of the uplink propagation path estimation value is higher than the estimation accuracy of the downlink propagation path estimation value. Therefore, this boundary value is set as the above-described fD threshold. By this means, it is possible to use the higher estimation accuracy between the uplink propagation path estimation value and the downlink propagation path estimation value for distortion compensation.

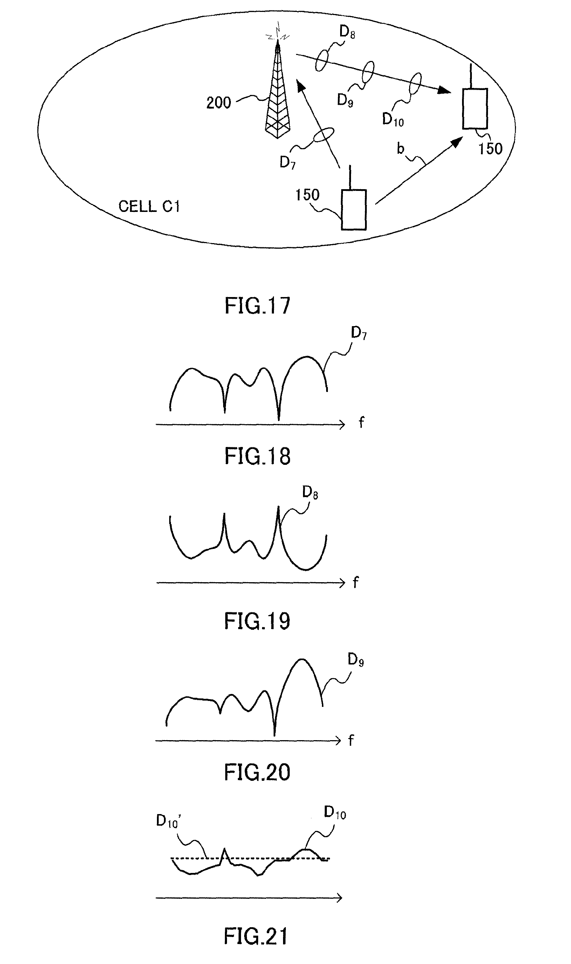

Next, the operations at base station apparatus 200 in the above-described configuration will be explained. Here, a case where an estimation error occurs in an uplink propagation path estimation value due to the movement of mobile station apparatus 150 will be explained as an example using FIG.17 to FIG.21.

As shown in FIG.17, base station apparatus 200 and mobile station apparatus 150 communicate with each other by radio in cell C1. A radio frame transmitted by mobile station apparatus 150 arrives at base station apparatus 200 through an uplink propagation path. At this time, the radio frame is subjected to propagation path distortion.

In base station apparatus 200, channel estimation section 122 performs channel estimation using a pilot multiplexed with the radio frame and estimates, for example, propagation path distortion D₇ shown in FIG.18. As shown in FIG.19, PE execution section 112 calculates weight D₈ showing an inverse characteristic of estimated propagation path distortion D₇. PE execution section 112 then superimposes calculated weight D₈ on the data.

fD measurement section 220 measures fD. Control section 210 then determines whether to apply PE to a radio frame (data) to be transmitted or to avoid the application of PE, based on the measurement result.

When the measured fD is less than an fD threshold, the estimation accuracy at base station apparatus 200 is equal to or above the estimation accuracy of propagation path distortion at mobile station apparatus 150, and, therefore, PE is determined to be applied to the radio frame (data).

In this case, the data on which weight D₈ is superimposed is multiplexed with the data section of the radio frame by multiplexing section 116, and this radio frame is transmitted to mobile station apparatus 150. The transmitted radio frame arrives at mobile station apparatus 150 through the downlink propagation path.

Here, assume that mobile station apparatus 150 moves in the direction indicated by arrow b in FIG.17 in the period after mobile station apparatus 150 transmits a radio frame until the radio frame arrives at mobile station apparatus 150. In this case, as shown in FIG.20, downlink propagation path distortion Dg becomes different from propagation path distortion D₇ estimated by channel estimation section 122. In other words, an ex-post estimation error has occurred in estimated propagation path distortion D₇.

The radio frame which arrives at mobile station apparatus 150 through the downlink propagation path is subjected to propagation path distortion D₉. Weight D₈ superimposed beforehand on the radio frame and propagation path distortion D₉ given to the radio frame in the downlink then cancel out each other.

If the estimation accuracy of propagation path distortion D₇ is good--that is, estimated propagation path distortion D₇ is substantially identical to propagation path distortion D₉--, as shown by D₁₀' inFIG.21, distortion in the frequency domain does not remain in the radio frame received by mobile station apparatus 150. However, propagation path distortion D₇ is actually not identical to propagation path distortion D₉, and, therefore, as shown in D₁₀ in FIG.21, distortion in the frequency domain remains in the radio frame received by mobile station apparatus 150. However, the propagation path distortion estimation accuracy at base station apparatus 200 is equal to or above the propagation path distortion estimation accuracy at mobile station apparatus 150. Furthermore, it is possible to eliminate the necessity of pilot transmission, with transmission of a PE applied frame, and use energy corresponding to pilot transmission for data transmission and improve the transmission efficiency.

By the way, when the fD measured by fD measurement section 220 is equal to or above the fD threshold, the propagation path distortion estimation accuracy at base station apparatus 200 is less than the propagation path distortion estimation accuracy at mobile station apparatus 150, and, therefore it is determined to avoid the application of PE to the radio frame (data).

In this case, the data on which weight D₈ superimposed is not output to multiplexing section 116 and the data with no weight D₈ superimposed is multiplexed with the data section of the radio frame at multiplexing section 116. Furthermore, a pilot is multiplexed with the pilot section of the radio frame. This radio frame is transmitted to mobile station apparatus 150. The transmitted radio frame arrives at mobile station apparatus 150 through the downlink propagation path. At this time, the radio frame is subjected to propagation path distortion D₉ as described above.

In mobile station apparatus 150, detection section 162 detects a pilot, and so the received signal of the data section is output to channel compensation section 165. Furthermore, channel estimation section 164 estimates downlink propagation path distortion using the pilot. Channel compensation section 165 then compensates for the distortion of the received signal of the data section based on the estimated propagation path distortion.

The propagation path distortion estimated at channel estimation section 164 includes an estimation error. Therefore, the distortion in the frequency domain remains in the received signal compensated at channel compensation section 165. However, the propagation path distortion estimation accuracy at mobile station apparatus 150 is higher than the propagation path distortion estimation accuracy at base station apparatus 200. Therefore, it is possible to improve the reception error rate at mobile station apparatus 150, compared to when PE is applied using the propagation path distortion estimated at base station apparatus 200 at all times without taking into consideration the propagation path distortion estimation accuracy at base station apparatus 200.

In this way, according to this embodiment, when fD is equal to or above the fD threshold, the estimation accuracy of the uplink propagation path estimation value is determined to be less than a certain level. On the other hand, when the fD is less than the fD threshold, the estimation accuracy is determined to be equal to or above the certain level. This means that it is possible to determine estimation accuracy of the uplink propagation path estimation value based on the comparison result between the fD and the fD threshold, and, therefore, the estimation accuracy can be determined in accordance with fluctuations in the propagation path characteristic due to the movement of mobile station apparatus 150.

Although with this embodiment only fD is used as a criterion for the estimation accuracy and fD measurement section 220 is therefore provided in base station apparatus 200, fD and, in addition, received SIR explained in Embodiment 1 may also be used as a criterion for the estimation accuracy. That is, SIR measurement section 124 explained in Embodiment 1 may be combined with fD measurement section 220 and provided in base station apparatus 200.

### (Embodiment 3)

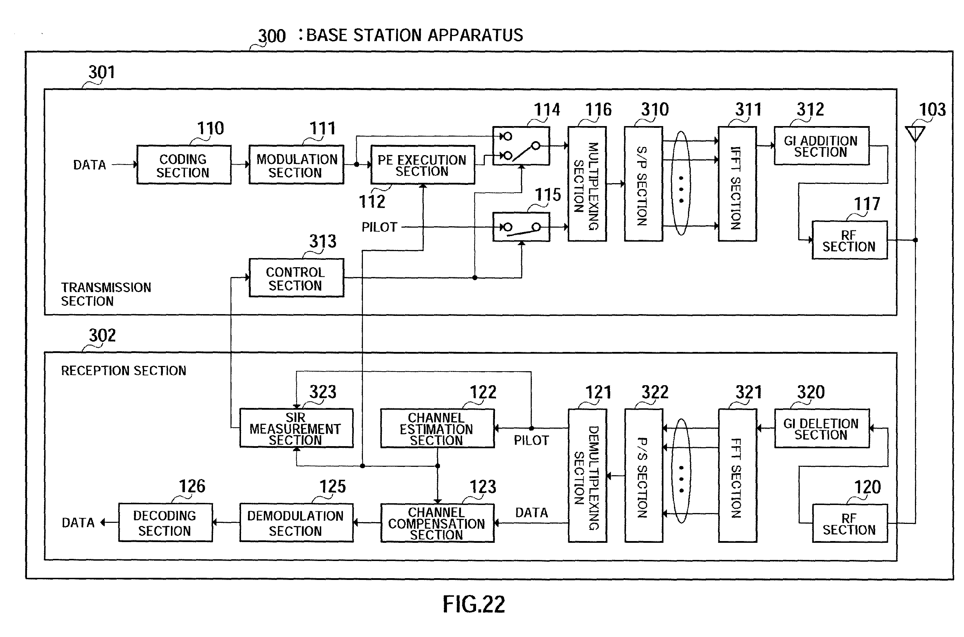

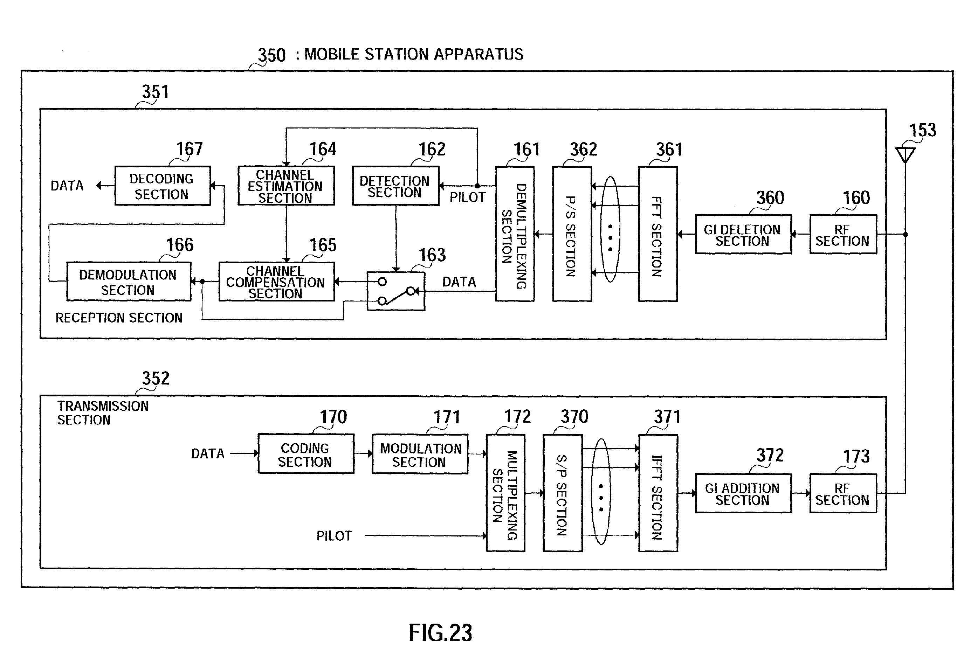

FIG.22 is a block diagram showing the configuration of a base station apparatus to which a radio transmission apparatus according to Embodiment 3 of the present invention is applied. Furthermore, FIG.23 is a block diagram showing the configuration of a mobile station apparatus to which a radio reception apparatus according to Embodiment 3 of the present invention is applied. Base station apparatus 300 in FIG.22 has the same basic configuration as base station apparatus 100 explained in Embodiment 1, and mobile station apparatus 350 in FIG.23 has the same basic configuration as mobile station apparatus 150 explained in Embodiment 1. Components that are the same as those explained in Embodiment 1 are assigned the same reference codes and their detailed explanations will be omitted.

Base station apparatus 300 has transmission section 301 and reception section 302 instead of transmission section 101 and reception section 102 explained in Embodiment 1. Transmission section 301 has serial/parallel conversion (S/P) section 310, IFFT (Inverse Fast Fourier Transform) section 311 and GI (Guard Interval) addition section 312 in addition to the components explained in Embodiment 1, and has control section 313 instead of control section 113 explained in Embodiment 1. Furthermore, in addition to the components explained in Embodiment 1, reception section 302 has GI deletion section 320, FFT (Fast Fourier Transform) section 321 and parallel/serial conversion (P/S) section 322 and has SIR measurement section 323 instead of SIR measurement section 124 explained in Embodiment 1.

That is, this embodiment applies an OFDM (Orthogonal Frequency Division Multiplexing) scheme to a radio transmission apparatus and a radio reception apparatus of the present invention. That is, an OFDM frame is generated from a radio frame subjected to multiplexing processing at multiplexing section 116 through processing in the stage subsequent to multiplexing section 116 (S/P section 310 and IFFT section 311).

In transmission section 301, control section 313 compares an SIR measured per subcarrier by SIR measurement section 323 (hereinafter, referred to as "subcarrier SIR") with a predetermined SIR threshold and, according to the comparison result, determines the estimation accuracy of an uplink propagation path estimation value-in other words, determines whether or not the reliability of the uplink propagation path estimation value is equal to or above a certain level. The SIR threshold of this embodiment is set using a technique similar to that in Embodiment 1.

For example, when the measured subcarrier SIR is equal to or above the SIR threshold, control section 313 determines that the estimation accuracy of the uplink propagation path estimation value is equal to or above the certain level. In this case, control section 313 controls switch 114 such that an output of PE execution section 112 and the input of multiplexing section 116 are connected to each other and also controls switch 115 such that the output stage (not shown) of the pilot and the input of multiplexing section 116 are not connected to each other. By this means, PE is applied to data of the radio frame superimposed on a subcarrier corresponding to the measured subcarrier SIR.

On the other hand, when the measured subcarrier SIR is less than the SIR threshold, control section 313 determines that the estimation accuracy of the uplink propagation path estimation value is less than the certain level. In this case, control section 313 controls switch 114 such that an output of modulation section 111 and the input of multiplexing section 116 are connected to each other and also controls switch 115 such that the output stage of the pilot and the input of multiplexing section 116 are connected to each other. By this means, the application of PE to the data of the radio frame superimposed on the subcarrier corresponding to the measured subcarrier SIR is avoided.

That is, the PE section of this embodiment switches between application and avoidance of PE per frame and also per subcarrier.

S/P section 310 performs a serial/parallel conversion on the radio frame subjected to multiplexing processing by multiplexing section 116. IFFT section 311 performs IFFT processing on the radio frame subjected to the serial/parallel conversion by S/P section 310. By this means, a plurality of radio frames input in parallel are superimposed on a plurality of subcarriers, and an OFDM frame are generated. GI addition section 312 adds GI to a predetermined position of the generated OFDM frame. The OFDM frame after GI addition is output to RF section 117.

In reception section 302, SIR measurement section 323 measures a subcarrier SIR using a pilot demultiplexed by demultiplexing section 121 and an uplink propagation path estimation value acquired by channel estimation section 122.

GI deletion section 320 deletes GI added in a predetermined position of the OFDM frame output from RF section 120. FFT section 321 performs FFT processing on the OFDM frame from which GI has been deleted by GI deletion section 320. By this means, a plurality of radio frames superimposed on a plurality of subcarriers are acquired. P/S section 322 performs a parallel/serial conversion on these radio frames. The radio frames after the parallel/serial conversion are output to demultiplexing section 121.

Mobile station apparatus 350 in FIG.23 has reception section 351 and transmission section 352 instead of reception section 151 and transmission section 152 explained in Embodiment 1, respectively. Reception section 351 has GI deletion section 360, FFT section 361 and P/S section 362, in addition to the components of reception section 151. Transmission section 352 has S/P section 370, IFFT section 371 and GI addition section 372, in addition to the components of transmission section 152.

In reception section 351, GI deletion section 360 deletes GI added in a predetermined position of an OFDM frame included in the received signal output from RF section 160 and outputs the received signal after GI deletion. FFT section 361 performs FFT processing on the received signal output from GI deletion section 360. P/S section 362 performs a parallel/serial conversion on the received signal subjected to FFT processing by FFT section 361. The received signal after the parallel/serial conversion is output to demultiplexing section 161.

In transmission section 352, S/P section 370 performs a serial/parallel conversion on the radio frame subjected to multiplexing processing by multiplexing section 172. IFFT section 371 performs IFFT processing on the radio frame subjected to the serial/parallel conversion by S/P section 370 and generates an OFDM frame. GI addition section 372 adds GI in a predetermined position of this OFDM frame. The OFDM frame after GI addition is output to RF section 173.

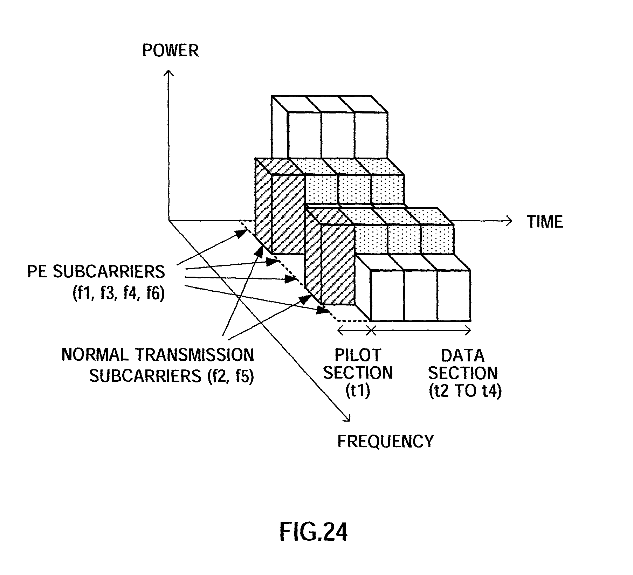

Next, the operations at the base station apparatus 300 having the above-described configuration will be explained. Here, the case will be explained as an example using FIG.24, where six subcarriers f1 to f6 are used for transmission of an OFDM frame.

First, SIR measurement section 323 measures subcarrier SIR's of subcarriers f1 to f6.

Here, assume that subcarrier SIR' S of subcarriers f1, f3, f4 and f6 are equal to or above an SIR threshold and subcarrier SIR's of subcarriers f2 and f5 are less than the SIR threshold, and subcarriers f1, f3, f4 and f5 are referred to as "PE subcarriers" and subcarriers f2 and f5 are referred to as "normal transmission subcarriers."

Control section 313 controls switches 114 and 115 such that PE is applied to the data of the radio frame superimposed on the PE subcarriers and such that the application of PE to the data of the radio frame superimposed on the normal transmission subcarriers is avoided.

By means of this control, a pilot is not transmitted in pilot section t1 of the radio frame superimposed on the PE subcarriers, and is transmitted in pilot section t1 of the radio frame superimposed on the normal transmission subcarriers.

In this way, according to this embodiment, switching between application and avoidance of PE is performed per subcarrier, so that it is possible to switch between application and avoidance of PE in accordance with a fluctuation of the estimation accuracy among subcarriers.

### (Embodiment 4)

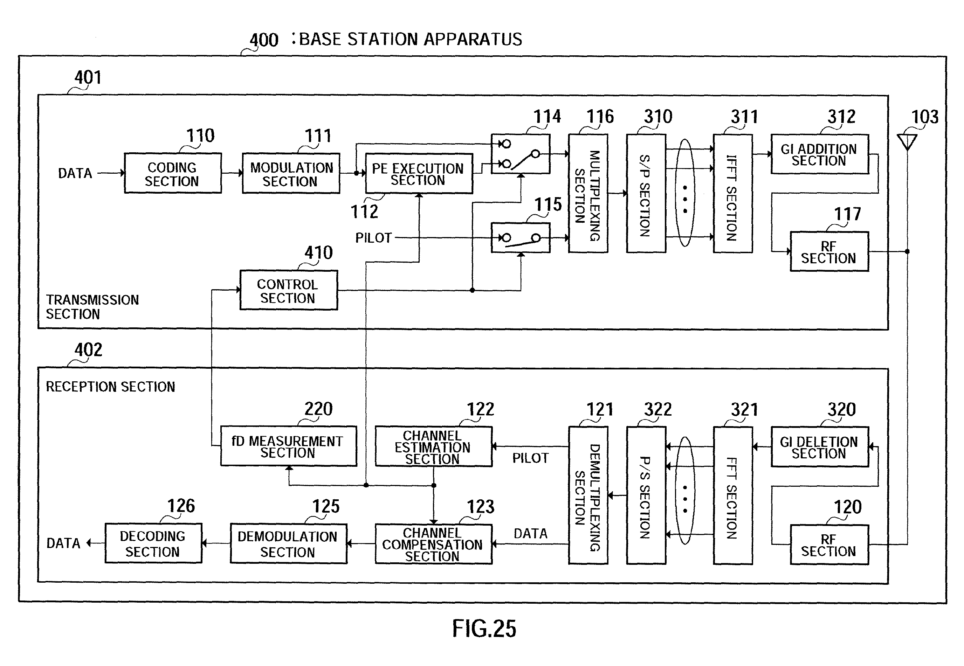

FIG.25 is a block diagram showing the configuration of a base station apparatus to which a radio transmission apparatus according to Embodiment 4 of the present invention is applied. Base station apparatus 400 in FIG.25 has the same basic configuration as base station apparatus 100 explained in Embodiment 1. Components that are the same as those explained in Embodiment 1 are assigned the same reference codes and their detailed explanations will be omitted.

Base station apparatus 400 has transmission section 401 and reception section 402 instead of transmission section 101 and reception section 102 explained in Embodiment 1, respectively. Transmission section 401 has a configuration where control section 313 is replaced with control section 410 out of the components of transmission section 301 explained in Embodiment 3. Reception section 402 has a configuration where SIR measurement section 323 is replaced with fD measurement section 220 explained in Embodiment 2 out of the components of reception section 302 explained in Embodiment 3.

Control section 410 compares an fD measured by fD measurement section 220 with a predetermined fD threshold and, according to the comparison result, determines whether or not the estimation accuracy of an uplink propagation path estimation value is equal to or above a certain level-- in other words, whether or not the reliability of the uplink propagation path estimation value is equal to or above a certain level. An fD threshold is set using the same technique as Embodiment 2.

For example, when the measured fD is less than the fD threshold, control section 410 determines that the estimation accuracy of the uplink propagation path estimation value is equal to or above the certain level. In this case, control section 410 controls control switch 114 such that the output of PE execution section 112 and the input of multiplexing section 116 are connected to each other and also controls switch 115 such that the output stage (not shown) of the pilot and the input of multiplexing section 116 are not connected to each other.

On the other hand, when the measured fD is equal to or above the fD threshold, control section 410 determines that the estimation accuracy of the uplink propagation path estimation value is less than the certain level. In this case, control section 410 controls switch 114 such that the output of modulation section 111 and the input of multiplexing section 116 are connected to each other and also controls switch 115 such that the output stage of the pilot and the input of multiplexing section 116 are connected to each other.

That is, the PE section of this embodiment switches between application and avoidance of PE per OFDM frame. Therefore, the same operation effect as base station apparatus 200 explained in Embodiment 2 can be achieved at base station apparatus 400 to which a multicarrier scheme including, for example, OFDM scheme is applied.

In this embodiment, although only fD is used as a criterion for estimation accuracy and fD measurement section 220 is therefore provided in base station apparatus 200, fD and, in addition, the subcarrier SIR explained in Embodiment 3 may also be used as a criterion for estimation accuracy. That is, SIR measurement section 323 explained in Embodiment 3 may be combined with fD measurement section 220 and provided in base station apparatus 400.

### (Embodiment 5)

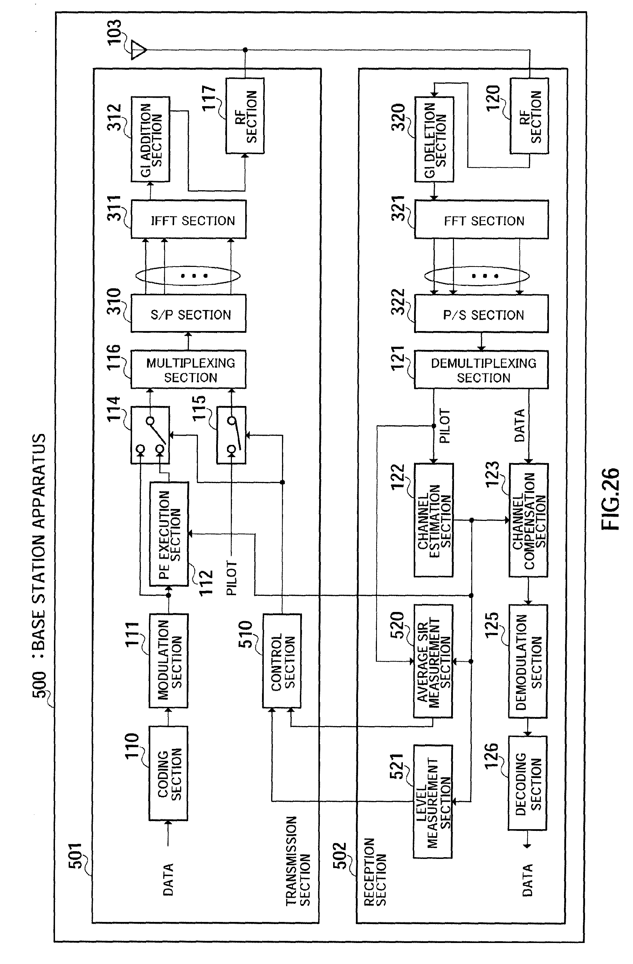

FIG.26 is a block diagram showing the configuration of a base station apparatus to which a radio transmission apparatus according to Embodiment 5 of the present invention is applied. Base station apparatus 500 in FIG.26 has the same basic configuration as base station apparatus 100 explained in Embodiment 1. Components that are the same as those explained in Embodiment 1 are assigned the same reference codes and their detailed explanations will be omitted. Furthermore, mobile station apparatus 350 explained in Embodiment 3 is able to communicate with base station apparatus 500 by radio.

Base station apparatus 500 has transmission section 501 and reception section 502 instead of transmission section 101 and reception section 102 explained in Embodiment 1, respectively. Transmission section 501 has a configuration where control section 313 is replaced with control section 510 out of the components of transmission section 301 explained in Embodiment 3. Furthermore, reception section 502 has a configuration where SIR measurement section 323 is replaced with average SIR measurement section 520 out of the components of reception section 302 explained in Embodiment 3 and level measurement section 521 is further added.

In transmission section 501, control section 510 compares an average SIR measured by average SIR measurement section 520 with a predetermined SIR threshold and, according to the comparison result, determines the estimation accuracy of an uplink propagation path estimation value--in other words, whether or not the reliability of the uplink propagation path estimation value-- is equal to or above a certain level. The SIR threshold of this embodiment is set in the same way as in Embodiment 1.

Furthermore, control section 510 compares the received level measured per subcarrier by level measurement section 521 with a predetermined level threshold and, according to this comparison result, switches control of switches 114 and 115. For example, when the measured average SIR is equal to or above the SIR threshold, control section 510 determines that the estimation accuracy of the uplink propagation path estimation value is equal to or above a certain level. An OFDM frame generated at this time is transmitted as a PE applied frame. When a plurality of subcarriers of this OFDM frame include subcarriers having received level higher than the level threshold and subcarriers having received level not higher than the level threshold, control is switched between the two types of subcarriers.

More specifically, when the measured received level is higher than the level threshold, control section 510 controls switch 114 such that the output of PE execution section 112 and the input of multiplexing section 116 are connected to each other and also controls switch 115 such that the output stage (not shown) of a pilot and the input of multiplexing section 116 are not connected to each other. In this way, PE is applied to data of the radio frame superimposed on subcarriers having received level higher than the level threshold.

However, even when measured average SIR is equal to or above the SIR threshold, provided that the measured received level is equal to or below the level threshold, control section 510 controls switch 114 such that the output of modulation section 111 and the input of multiplexing section 116 are connected to each other and also controls switch 115 such that the output stage of the pilot and the input of multiplexing section 116 are connected to each other. By this means, the application of PE to the data of the radio frame superimposed on subcarriers having received level equal to or below the level threshold is avoided.

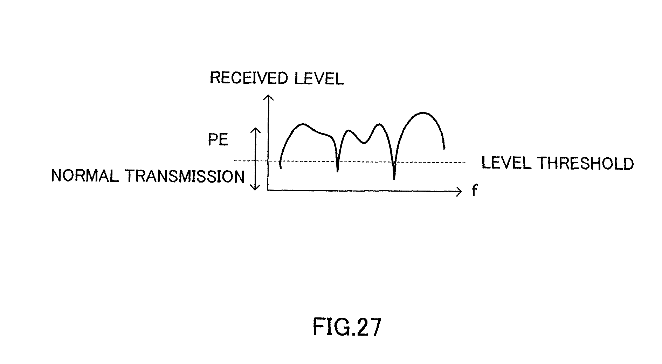

Due to multipath propagation paths, frequency selective fading generally occurs in multicarrier communications. The received level of subcarriers located at null of deep frequency selective fading falls to, for example, -30 dB or below, with respect to an average received level of all subcarriers. To equalize this fall using PE by PE execution section 112, transmission power of a reciprocal number is required. For example, for null of -30 dB, transmission power of +30 dB is required. Therefore, a transmission amplifier of high amplification performance is necessary and power consumption also increases accordingly. Therefore, as shown in FIG.27, the application of PE is avoided with respect to data of a radio frame superimposed on subcarriers having the received level of a deep null equal to or below the level threshold. On the other hand, PE is applied to data of the radio frame superimposed on subcarriers having the received level exceeding the level threshold and no deep null.

On the other hand, when the measured average SIR is less than the SIR threshold, control section 510 determines that the estimation accuracy of the uplink propagation path estimation value is less than the certain level. In this case, irrespective of the comparison result between the measured received level and the level threshold, control section 510 controls switch 114 such that the output of modulation section 111 and the input of multiplexing section 116 are connected to each other and also controls switch 115 such that the output stage of the pilot and the input of multiplexing section 116 are connected to each other. By this means, the application of PE to the data of the radio frame superimposed on all subcarriers is avoided. That is, an OFDM frame generated in this case is transmitted as a normal transmission frame.

In reception section 502, average SIR measurement section 520 measures an average SIR using a pilot demultiplexed by demultiplexing section 121 and an uplink propagation path estimation value acquired by channel estimation section 122. More specifically, average SIR measurement section 520 measures SIR's of all subcarriers for use. In general, from the standpoint of transmission efficiency, the length of a pilot per subcarrier is approximately 0 to several symbols. That is, the length of a pilot of each subcarrier is short. Therefore, by measuring an average SIR of all subcarriers, it is possible to measure an SIR more accurately than by measuring a SIR individually per subcarrier.

Level measurement section 521 measures a received level per subcarrier using the uplink propagation path estimation value acquired by channel estimation section 122.

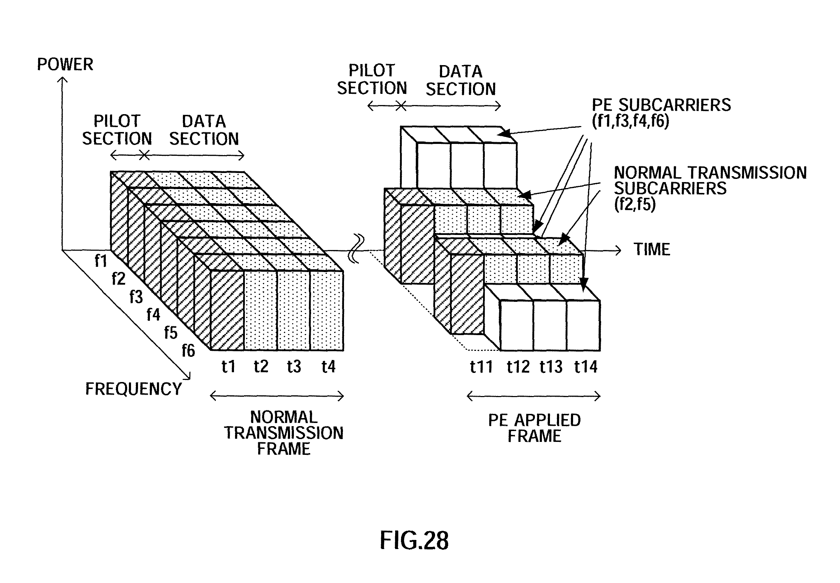

Next, the operations at base station apparatus 500 having the above-described configuration will be explained. Here, a case will be explained as an example using FIG.28, where six subcarriers f1 to f6 are used for transmission of a radio frame.

Average SIR measurement section 520 measures an average SIR of subcarriers f1 to f6. Furthermore, level measurement section 521 measures received levels of subcarriers f1 to f6. Here, suppose that each received level of subcarriers f1, f3, f4 and f6 is higher than a level threshold and received levels of subcarriers f2 and f5 are equal to or below the level threshold. Hereinafter, subcarriers f1, f3, f4 and f6 will be referred to as "PE subcarriers" and subcarriers f2 and f5 will be referred to as "normal transmission subcarriers."

When the measured average SIR is less than the SIR threshold, control section 510 controls switches 114and 115 such that the application of PE to the data of the radio frames superimposed on subcarriers f1 to f6 are avoided.

By means of this control, pilots are transmitted in pilot sections t1 of the radio frame superimposed on subcarriers f1 to f6, and data for which the application of PE has been avoided is transmitted in data sections t2 to t4.

On the other hand, when the average SIR is equal to or above the SIR threshold, control section 510 switches control depending on whether or not the received level is equal to or below the level threshold. That is, control section 510 controls switches 114 and 115 such that the application of PE to the radio frames superimposed on the normal transmission subcarriers are avoided. By means of this control, pilots are transmitted in pilot section t11 of the radio frame superimposed on the normal transmission subcarriers, and data for which the application of PE has been avoided is transmitted in data sections t12 to t14. Furthermore, control section 510 controls switches 114, 115 so that PE is applied to the radio frame superimposed on the PE subcarriers . By means of this control, transmission of pilots is avoided for pilot section t11 of the radio frame superimposed on the PE subcarriers (pilot section t11 becomes a no transmission section), and data to which PE has been applied is transmitted in data sections t12 to t14.

In this way, according to this embodiment, the application of PE is avoided with respect to data of the radio frame superimposed on subcarriers having the received level of a deep null equal to or below the level threshold. Furthermore, PE is applied to data of the radio frame superimposed on subcarriers having the received level exceeding the level threshold and no deep null. Therefore, it is possible to prevent power from being excessively consumed when PE is applied and reduce power consumption.

### (Embodiment 6)

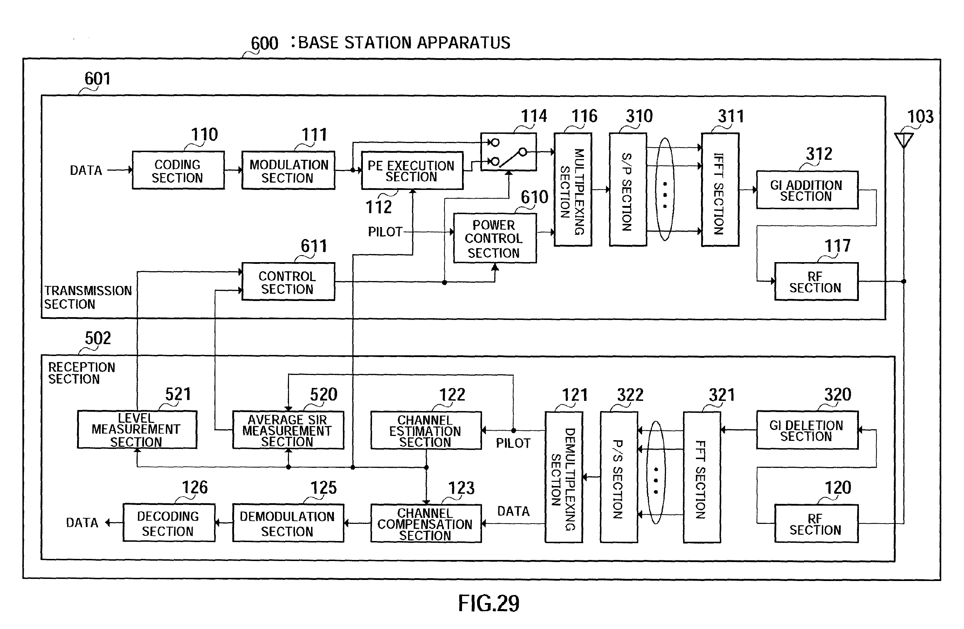

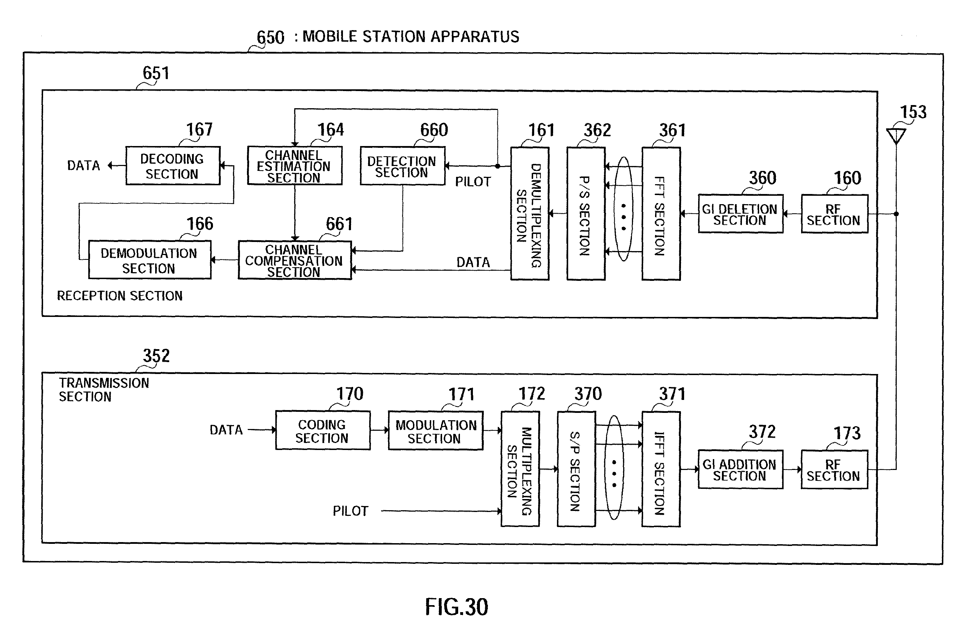

FIG.29 is a block diagram showing the configuration of a base station apparatus to which a radio transmission apparatus according to Embodiment 6 of the present invention is applied. Furthermore, FIG.30 is a block diagram showing the configuration of a mobile station apparatus to which a radio reception apparatus according to this embodiment is applied. Base station apparatus 600 in FIG.29 and mobile station apparatus 650 in FIG.30 have the same basic configurations as base station apparatus 100 and mobile station apparatus 150 explained in Embodiment 1, respectively. Components that are the same as those explained in Embodiment 1 are assigned the same reference codes and their detailed explanations will be omitted.

Base station apparatus 600 has transmission section 601 and reception section 502 explained in Embodiment 5 instead of transmission section 101 and reception section 102 explained in Embodiment 1, respectively. Transmission section 601 has a configuration where switch 115 and control section 510 are replaced with power control section 610 and control section 611, respectively, out of the components of transmission section 501 explained in Embodiment 5.

Control section 611 compares an average SIR measured by average SIR measurement section 520 with a predetermined SIR threshold and, according to the comparison result, determines whether or not the estimation accuracy of an uplink propagation path estimation value--in other words, the reliability of the uplink propagation path estimation value--is equal to or above a certain level. The SIR threshold of this embodiment is set using the same technique as in Embodiment 1. Furthermore, control section 611 compares the received level measured by level measurement section 521 with the level threshold explained in Embodiment 5 and, according to this comparison result, switches controls between switch 114 and power control section 610.

For example, when the measured average SIR is equal to or above the SIR threshold, control section 611 determines that the estimation accuracy of the uplink propagation path estimation value is equal to or above a certain level. If the measured received level is higher than the level threshold at this time, control section 611 controls switch 114 such that the output of PE execution section 112 and the input of multiplexing section 116 are connected to each other and also controls power control section 610 so as to lower transmission power of a pilot. By this means, PE is applied to data of the radio frame superimposed on subcarriers having received level higher than the level threshold.

However, even when the measured average SIR is equal to or above the SIR threshold, provided that the measured received level is equal to or below the level threshold, control section 611 controls switch 114 such that the output of modulation section 111 and the input of multiplexing section 116 are connected to each other and also controls power control section 610 so as to increase transmission power of a pilot. By this means, the application of PE to data of the radio frame superimposed on subcarriers having received level equal to or below the level threshold is avoided.

On the other hand, when measured average SIR is less than the SIR threshold, control section 611 determines that the estimation accuracy of the uplink propagation path estimation value is less than the certain level. In this case, irrespective of the comparison result between the measured received level and the level threshold, control section 611 controls switch 114 such that the output of modulation section 111 and the input of multiplexing section 116 are connected to each other and also controls power control section 610 so as to increase the transmission power of the pilot. By this means, the application of PE to data of the radio frame superimposed on all subcarriers is avoided.

Power control section 610 distributes total transmission power assigned to a pilot channel beforehand for transmitting pilots, to pilots of radio frames superimposed on subcarriers. Furthermore, when controlled so as to lower transmission power of a pilot under the control of control section 611, power control section 610 sets the transmission power of the pilot to a predetermined first value. On the other hand, when controlled so as to increase the transmission power of the pilot under the control of control section 611, power control section 610 sets the transmission power of the pilot to a predetermined second value.

Here, the first value is less than a value of transmission power of the subcarrier when the total transmission power is equally distributed among pilots of the subcarriers. Furthermore, the second value is greater than the value of the transmission power of the subcarriers when the total transmission power is equally distributed among the subcarriers.

Generally, distortion compensation on the receiving side requires compensation not only for propagation path distortion but also for distortion of a radio circuit such as frequency offset and phase noise. Distortion of this radio circuit can be detected and compensated using a pilot. Therefore, even when PE is applied to a radio frame, provided that a pilot is transmitted with minimum power that is able to compensate for the distortion of the radio circuit, the distortion included in the received signal can be compensated adequately. Moreover, when a pilot multiplexed with the data to which PE has been applied is transmitted with the above-described minimum power, the remaining power of the total transmission power can be distributed to a pilot multiplexed with data for which PE application is avoided. Therefore, it is possible to efficiently use the total transmission power without increasing the total transmission power.

Mobile station apparatus 650 in FIG.30 has reception section 651 and transmission section 352 explained in Embodiment 3 instead of reception section 151 and transmission section 152 explained in Embodiment 1, respectively. Reception section 151 has a configuration where detection section 162 and channel compensation section 165 are replaced with detection section 660 and channel compensation section 661, respectively, out of the components of reception section 351 explained in Embodiment 3. Furthermore, reception section 651 is not provided with switch 163 out of the components of reception section 351.

Detection section 660 measures the received level of a received signal of a pilot section demultiplexed by demultiplexing section 161. Detection section 660 then determines whether the data of the received radio frame is data to which PE application has been performed or avoided according to the measured received level.

When the determination result by detection section 660 shows that the data of the received radio frame is data for which the application of PE has been avoided, channel compensation section 661 compensates for the distortion of the received signal of the data section based on a downlink propagation path estimation value acquired by channel estimation section 164. Distortion to be compensated in this case is distortion of the radio circuit including, for example, propagation path distortion, a frequency offset and phase noise. On the other hand, when the determination result by detection section 660 shows that PE has been applied to the data of the received radio frame, channel compensation section 661 also compensates for the distortion of the received signal of the data section based on the downlink propagation path estimation value acquired by channel estimated value 164. However, the distortion to be compensated in this case is only the distortion of the radio circuit including, for example, a frequency offset and phase noise and compensation for the propagation path distortion, which is distortion in the frequency domain, is avoided. The received signal of the data section where distortion has been compensated is output to demodulation section 166.

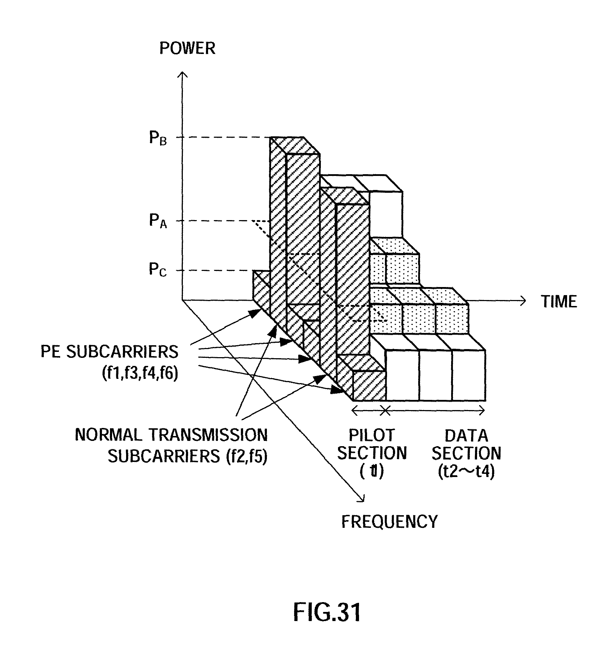

Next, the operations at base station apparatus 600 in the above-described configuration will be explained. Here, a case will be explained as an example using FIG.31, where six subcarriers f1 to f6 are used for transmission of a radio frame.

Average SIR measurement section 520 measures an average SIR of subcarriers f1 to f6. Furthermore, level measurement section 521 measures received levels of subcarriers f1 to f6. Here, suppose that the received levels of subcarriers f1, f3, f4 and f6 are higher than a level threshold and that the received levels of subcarriers f2 and f5 are equal to or below the level threshold. Hereinafter, subcarriers f1, f3, f4 and f6 will be referred to as "PE subcarriers" and subcarriers f2 and f5 will be referred to as "normal transmission subcarriers."

When the average SIR is equal to or above the SIR threshold, control section 611 switches between controls depending on whether or not the received level is equal to below the level threshold. That is, control section 611 controls switch 114 such that the application of PE to data of the radio frames superimposed on normal transmission subcarriers are avoided and also controls power control section 610. By means of this control, in pilot section t1 of the normal transmission subcarriers, a pilot is transmitted with transmission power P_{B} which is greater than transmission power P_{A} of the subcarriers when total transmission power is equally distributed among subcarriers f1 to f6. In data sections t2 to t4, data for which the application of PE has been avoided is transmitted. Furthermore, control section 611 controls switch 114 such that PE is applied to data of the radio frames superimposed on the PE subcarriers and also controls power control section 610. By means of this control, in pilot section t1 of the PE subcarriers, a pilot is transmitted with transmission power P_{C} which is smaller than transmission power P_{A} and, in data sections t2 to t4, data to which PE has been applied is transmitted.

In this way, according to this embodiment, transmission power, out of the total transmission power of pilots, for pilots of normal transmission subcarriers is greater than transmission power of pilots of PE subcarriers, base station apparatus 600 is able to maintain the total transmission power of pilots and set transmission power of a pilot per subcarrier, thereby compensating for distortion to be compensated at the signal of the radio frames with adequate accuracy.

With this embodiment, a case has been explained as an example where a certain degree of transmission power is distributed among pilots of both PE subcarriers and normal transmission subcarriers. However, the method of distributing transmission power is not limited to the above. For example, transmission power to be distributed among pilots of PE subcarriers may also be set to zero. In this case, it is possible to improve the accuracy of distortion compensation for data for which the application of PE has been avoided to a maximum level. Furthermore, in this case, mobile station apparatus 350 explained in Embodiment 3 is able to communicate with base station apparatus 600 by radio.

The base station apparatus, mobile station apparatus and subcarrier of the above-described embodiments may also be expressed as "Node B," "UE" and "tone," respectively.

Furthermore, the reception quality measured at the above-described embodiments is not limited to SIR. The reception quality may be measured using, for example, SIR, SNR, SINR, CIR, CNR, CINR, RSSI, reception intensity, reception power, interference power, error rate, transmission rate, throughput, amount of interference or MCS that is able to achieve a predetermined error rate.

Furthermore, the frame used for the explanations of the above-described embodiments may also be expressed as a subframe, slot or block.

In addition, each of functional blocks employed in the description of the above-mentioned embodiment may typically be implemented as an LSI constituted by an integrated circuit. These are may be individual chips or partially or totally contained on a single chip.

"LSI" is adopted here but this may also be referred to as an "IC, " "system LSI," "super LSI," or "ultra LSI" depending on differing extents of integration.

Further, the method of integrating circuits is not limited to the LSI's, and implementation using dedicated circuitry or general purpose processor is also possible. After LSI manufacture, utilization of FPGA (Field Programmable Gate Array) or a reconfigurable processor where connections or settings of circuit cells within an LSI can be reconfigured is also possible.

Furthermore, if integrated circuit technology comes out to replace LSI's as a result of the advancement of semiconductor technology or derivative other technology, it is naturally also possible to carry out function block integration using this technology. Application in biotechnology is also possible.

The present application is based on Japanese Patent Application No.2004-261673 filed on September 8, 2004, the entire content of which is expressly incorporated by reference herein.

### Industrial Applicability

The radio transmission apparatus and the pre-equalization method thereof according to the present invention are useful, for example, as a base station apparatus and a mobile station apparatus which are used in an environment where a propagation path characteristic may fluctuate with time.

## Claims

1. A radio transmission apparatus comprising:
an acquisition section that acquires a propagation path estimation value;
a determination section that determines whether or not estimation accuracy of the acquired propagation path estimation value is equal to or above a predetermined level;
a pre-equalization section that applies pre-equalization based on the acquired propagation path estimation value to a transmission signal when the estimation accuracy is determined to be equal to or above said predetermined level and that avoids application of the pre-equalization to the transmission signal when the estimation accuracy is determined to be less than said predetermined level; and
a transmission section that transmits a transmission signal to which the pre-equalization is applied and a transmission signal for which the application of the pre-equalization is avoided.

2. The radio transmission apparatus according to claim 1, wherein said determination section determines that the estimation accuracy is equal to or above said predetermined level when reception quality is equal to or above a predetermined threshold, and determines that the estimation accuracy is less than said predetermined level when the reception quality is less than said predetermined threshold.

3. The radio transmission apparatus according to claim 1, wherein said determination section determines that the estimation accuracy is less than said predetermined level when a maximum Doppler frequency is equal to or above a predetermined threshold, and determines that the estimation accuracy is equal to or above said predetermined level when the maximum Doppler frequency is less than said predetermined threshold.

4. The radio transmission apparatus according to claim 1, further comprising a multiplexing section that multiplexes a known signal with the transmission signal when the application of pre-equalization to the transmission signal is avoided and that avoids the multiplexing of the known signal when the pre-equalization is applied to the transmission signal.

5. The radio transmission apparatus according to claim 4, wherein said pre-equalization section switches between application and avoidance of the pre-equalization per frame.

6. The radio transmission apparatus according to claim 4, wherein:
the transmission signal is superimposed on subcarriers; and
said pre-equalization section switches between application and avoidance of the pre-equalization per subcarrier.

7. The radio transmission apparatus according to claim 6, wherein, when the received level of the subcarrier on which the transmission signal is superimposed is equal to or below a predetermined value, said pre-equalization section avoids the application of pre-equalization to the transmission signal.

8. The radio transmission apparatus according to claim 1, further comprising:
a multiplexing section that multiplexes known signals with a first transmission signal to which the pre-equalization is applied and with a second transmission signal for which the application of pre-equalization is avoided, the first and second transmission signals being superimposed on different subcarriers; and
a control section that performs control for distributing total transmission power of the known signals the known signal of the first transmission signal and the known signal of the second transmission signal, wherein said control section causes the second transmission power distributed to the known signal of the second transmission signal to be greater than the first transmission power distributed to the known signal of the first transmission signal.

9. The radio transmission apparatus according to claim 8, wherein said control section sets the first transmission power to a minimum value necessary for compensating for distortion including a frequency offset or phase noise.

10. The radio transmission apparatus according to claim 8, wherein said control section sets the first transmission power to zero.

11. A radio reception apparatus comprising:
an estimation section that estimates a propagation path characteristic using a received signal to acquire a propagation path estimation value;
a determination section that determines whether the received signal is one to which pre-equalization is applied or one for which application of pre-equalization is avoided; and
a compensation section that compensates for distortion of the received signal based on the acquired propagation path estimation value when the received signal is determined to be one for which application of pre-equalization is avoided and that avoids compensation for the distortion when the received signal is determined to be one to which pre-equalization is applied.

12. The radio reception apparatus according to claim 11, wherein said compensation section compensates for distortion in a frequency domain when the received signal is determined to be one for which application of pre-equalization is avoided and avoids the compensation for the distortion in the frequency domain when the received signal is determined to be one to which pre-equalization is applied.

13. A pre-equalization method comprising the steps of:
acquiring a propagation path estimation value;
determining whether or not estimation accuracy of the acquired propagation path estimation value is equal to or above a predetermined level; and
applying pre-equalization to a transmission signal when the estimation accuracy of the acquired propagation path estimation value is determined to be equal to or above a predetermined level, and avoiding application of the pre-equalization to the transmission signal when the estimation accuracy is determined to be less than said predetermined level.
